# EUROPEAN PATENT SPECIFICATION

(11) **EP 1 228 149 B1**
(45) Date of publication and mention of the grant of the patent: **14.04.2004**
(21) Application number: 00971556.6
(22) Date of filing: 23.10.2000
(51) Int. Cl.: C09B 31/02, C09B 31/08, C09D 11/00

(54) **DISAZO DYESTUFFS FOR INK JET PRINTING**
DISAZOFARBSTOFFE FÜR DEN TINTENSTRAHLDRUCK
COLORANTS DISAZO POUR IMPRESSION A JET D'ENCRE

(30) Priority: 29.10.1999 GB 9925522; 29.10.1999 GB 9925521; 29.10.1999 GB 9925519; 29.10.1999 GB 9925518
(43) Date of publication of application: 07.08.2002
(73) Proprietor: Avecia Limited, Blackley, Manchester M9 8ZS (GB)
(72) Inventor: MISTRY, Prahalad, Manibhai, Blackley Manchester M9 8ZS (GB)
(74) Representative: Giles, David Eric
(86) International application number: PCT/GB2000/004083
(87) International publication number: WO 2001/030917

(56) References cited:
- EP-A- 0 347 803
- EP-A- 0 611 811
- EP-A- 0 859 033
- WO-A-00/50515

## Description

This invention relates to dyes, to inks and to their use in ink jet printing ("IJP"). IJP is a non-impact printing technique in which droplets of ink are ejected through a fine nozzle onto a substrate without bringing the nozzle into contact with the substrate.

There are many demanding performance requirements for dyes and inks used in IJP. For example they desirably provide sharp, non-feathered images having good waterfastness, light-fastness and optical density. The inks are often required to dry quickly when applied to a substrate to prevent smudging, but they should not form a crust over the tip of an ink jet nozzle because this will stop the printer from working. The inks should also be stable to storage over time without decomposing or forming a precipitate which could block the fine nozzle.

According to the present invention there is provided a compound of Formula (1) and salts thereof: 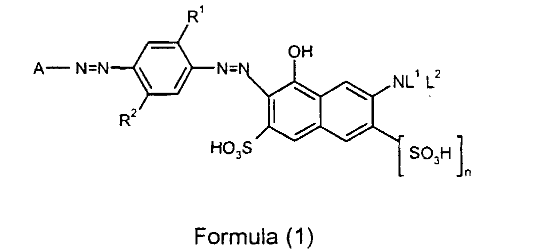 wherein:
A is a substituted phenyl group carrying a group of the formula -NR³R⁴ and an ortho group selected from sulpho, phosphonato and phosphinato;
n is 0 or 1;
L¹ and L² are each independently H, optionally substituted alkyl, optionally substituted cycloalkyl or optionally substituted aryl, or L¹ and L² together with the N atom to which they are attached form an optionally substituted 5- or 6- membered ring;
R¹ and R² are each independently optionally substituted alkyl or optionally substituted alkoxy, wherein at least one of R¹ and R² carries an -OH group, and
R³ and R⁴ are each independently H, optionally substituted alkyl, optionally substituted cycloalkyl or optionally substituted aryl, or R³ and R⁴ together with the nitrogen atom to which they are attached form an optionally substituted 5- or 6-membered ring; or
R³ is H, optionally substituted alkyl, optionally substituted cycloalkyl or optionally substituted aryl and R⁴ is an acyl group.

In a first preferred embodiment n is 0; L¹ and L² are H; and R³ and R⁴ are each independently H, optionally substituted alkyl, optionally substituted cycloalkyl or optionally substituted aryl, or R³ and R⁴ together with the N atom to which they are attached form an optionally substituted 5- or 6-membered ring.

In a second preferred embodiment n is 1; L¹ and L² are H; and R³ and R⁴ are each independently H, optionally substituted alkyl, optionally substituted cycloalkyl or optionally substituted aryl, or R³ and R⁴ together with the N atom to which they are attached form an optionally substituted 5- or 6-membered ring.

In a third preferred embodiment n is 0; L¹ and L² are H; R³ is H, optionally substituted alkyl, optionally substituted cycloalkyl or optionally substituted aryl; and R⁴ is an acyl group.

In a fourth preferred embodiment n is 1; L¹ and L² are H; R³ is H, optionally substituted alkyl, optionally substituted cycloalkyl or optionally substituted aryl; and R⁴ is an acyl group.

Preferred acyl groups represented by R⁴ are of the formula -COR⁵, -SOR⁵ or -SO₂R⁵ wherein, R⁵ is H, optionally substituted alkyl, optionally substituted cycloalkyl or optionally substituted aryl. It is especially preferred that R⁴ is of the formula CH₃(CH₂)ₐCO- wherein a has a value from 0 to 3.

The optional substituents which may be present on L¹, L², R1, R², R³, R⁴ and R⁵ are preferably selected from -NH₂; halo, especially Cl, Br and F; ester, especially -CO₂-C₁₋ ₄-alkyl; -O-C₁₋₄-alkyl; -CO₂H; -SO₃H; -OR⁶; or -SR⁶; wherein each R⁶ independently is H or C₁₋₄-alkyl.

Preferably at least one of R¹ and R², or more preferably both R¹ and R², carries an -OH group.

When L¹, L², R¹, R², R³, R⁴ and R⁵ is an optionally substituted alkyl group it is preferably an optionally substituted C₁₋₄-alkyl group, more preferably a C₁₋₄-alkyl group or a C₁₋₄-alkyl-OH group.

When R¹ or R² is an optionally substituted alkoxy group it is preferably an optionally substituted C₁₋₄-alkoxy group, more preferably a C₁₋₄-alkoxy or a C₁₋₄-alkoxy-OH group.

R¹ and R² are preferably each independently optionally substituted C₁₋₄-alkyl or optionally substituted C₁₋₄-alkoxy, provided that at least one of R¹ and R² carries an -OH group, more preferably optionally substituted C₁₋₄-alkoxy, especially C₁₋₄-alkoxy-OH.

In one embodiment one of R¹ and R² is -OC₁₋₄-alkyl-OH and the other is -OC₁₋₄-alkyl or -OC₁₋₄-alkyl-OH.

When L¹, L², R³, R⁴ or R⁵ is optionally substituted aryl it is preferably optionally substituted phenyl, more preferably phenyl or phenyl carrying a carboxy and/or sulpho group. When R³ and R⁴ or L¹ and L² together with the nitrogen atom to which they are attached form an optionally substituted 5- or 6- membered ring such ring is preferably an optionally substituted morpholino or piperidino ring

Preferably the ortho group on A is sulpho.

Based on the above preferences it is preferred that R³ and R⁴ are each independently selected from optionally substituted C₁₋₄-alkyl and optionally substituted phenyl, or R³ and R⁴ together with the nitrogen atom to which they are attached form an optionally substituted 5- or 6- membered ring. It is especially preferred that R³ and R⁴ are each independently selected from C₁₋₄-alkyl, C₁₋₄-alkyl-OH, phenyl and phenyl carrying a carboxy and/or sulpho group, or R³ and R⁴ together with the nitrogen to which they are attached form an optionally substituted morpholino or piperidino ring.

It is also preferred that when R⁴ is acyl that R³ is preferably selected from optionally substituted C₁₋₄-alkyl and optionally substituted phenyl. It is especially preferred that when R⁴ is acyl that R³ is selected from C₁₋₄-alkyl, C₁₋₄-alkyl-OH, phenyl and phenyl carrying a carboxy and/or sulpho group.

It is especially preferred that the group of formula -NR³R⁴ is in the para position with respect to the azo linkage because this gives particularly good optical density.

Dyes with similar structures as that of formula (1) are disclosed in EP-A-611,811; WO-A-00/50 515; EP-A-859,033.

The dyes of Formulae (1) may be prepared by diazotising a compound of the Formula (2) to give a diazonium salt and coupling the resultant diazonium salt with a 1-hydroxy-3-sulphonaphthalene 1-hydroxy-3,6-disulphonaphthalene, in each case carrying an NL¹L² substituent at the 7-position: 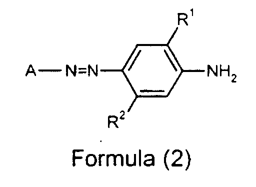 wherein A, L¹, L², R¹ and R² are as hereinbefore defined.

The hydroxy group(s) on R¹ and/or R² may be protected during the diazotisation, for example using an acid labile or base labile protecting group. The acetoxy protecting group is particularly convenient and inexpensive.

The diazotisation is preferably performed at room temperature or below. Preferably the diazotisation is performed in water, preferably at a pH below 7. Dilute mineral acid, e.g. HCl or H₂SO₄, may be used to achieve the desired acidic conditions.

The compound of Formula (2) may be prepared by diazotising a compound of formula A-NH₂ and coupling onto an aniline compound carrying R' and R² groups at the 2-and 5- positions respectively, wherein A, R¹ and R² are as hereinbefore defined.

Preferred salts are alkali metal salts (especially lithium, sodium and potassium salts), ammonium and substituted ammonium salts and mixtures thereof. Especially preferred salts are sodium, potassium and lithium salts, salts with ammonia and volatile amines and mixtures thereof. The lithium salts have good solubility, forming particularly storage stable inks with low tendency to block ink jet nozzles.

The dyes may be converted into a desired salt using known techniques. For example, an alkali metal salt of a dye may be converted into the ammonium or substituted ammonia salt by dissolving an alkali metal salt of the dye in water, acidifying with a mineral acid and adjusting the pH of the solution to pH 9 to 9.5 with ammonia or the amine and removing the alkali metal cations by dialysis or by use of an ion exchange resin.

Examples of amines which may be used to form such salts include methylamine, dimethylamine, trimethylamine, ethylamine, n-propylamine, iso-propylamine, n-butylamine, iso-butylamine, sec-butylamine, tert-butylamine, piperidine, pyridine, morpholine, allylamine, diethylamine, triethylamine and mixtures thereof. It is not essential that the dyes are completely in the form of the ammonium salt or substituted ammonium salt and mixed alkali metal and either ammonium salt or substituted ammonium salt are effective, especially those in which at least 50% of the cations are ammonium or substituted ammonium ions.

Still further salts are those with the counter ions described in US 5,830,265, claim 1, integer (b), which are included herein by reference thereto.

The dyes of Formula (1) may exist in tautomeric forms other than those shown in this specification. These tautomers are included within the scope of the present claims.

According to a second aspect of the present invention there is provided an ink comprising a compound of Formula (1) or salt thereof and a liquid medium or a low melting point solid medium.

A preferred ink comprises:
(a) from 0.01 to 30 parts of a compound of the Formula (1) or salt thereof; and
(b) from 70 to 99.99 parts of a liquid medium or a low melting point solid medium;
wherein all parts are by weight and the number of parts of (a)+(b)=100.

The number of parts of component (a) is preferably from 0.1 to 20, more preferably from 0.5 to 15, and especially from 1 to 5 parts. The number of parts of component (b) is preferably from 99.9 to 80, more preferably from 99.5 to 85, especially from 99 to 95 parts.

When the medium is a liquid, preferably component (a) is completely dissolved in component (b). Preferably component (a) has a solubility in component (b) at 20°C of at least 10%. This allows the preparation of liquid dye concentrates which may be used to prepare inks and reduces the chance of the dye precipitating if evaporation of the liquid medium occurs during storage.

Preferred liquid media include water, a mixture of water and an organic solvent and an organic solvent free from water.

When the liquid medium comprises a mixture of water and an organic solvent, the weight ratio of water to organic solvent is preferably from 99:1 to 1:99, more preferably from 99:1 to 50:50 and especially from 95:5 to 80:20.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably the liquid medium comprises water and 2 or more, especially from 2 to 8, water-soluble organic solvents.

Especially preferred water-soluble organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol.

Examples of further suitable ink media comprising a mixture of water and one or more organic solvents are described in US 4,963,189, US 4,703,113, US 4,626,284 and EP 4,251,50A.

When the liquid medium comprises an organic solvent free from water, (i.e. less than 1% water by weight) the solvent preferably has a boiling point of from 30° to 200°C, more preferably of from 40° to 150°C, especially from 50 to 125°C. The organic solvent may be water-immiscible, water-miscible or a mixture of such solvents. Preferred water-miscible organic solvents are any of the hereinbefore described water-miscible organic solvents and mixtures thereof. Preferred water-immiscible solvents include, for example, aliphatic hydrocarbons; esters, preferably ethyl acetate; chlorinated hydrocarbons, preferably CH₂Cl₂; and ethers, preferably diethyl ether; and mixtures thereof.

When the liquid medium comprises a water-immiscible organic solvent, preferably a polar solvent is included because this enhances solubility of the dye in the liquid medium. Examples of polar solvents include C₁₋₄-alcohols. In view of the foregoing preferences it is especially preferred that where the liquid medium is an organic solvent free from water it comprises a ketone (especially methyl ethyl ketone) &/or an alcohol (especially a C₁₋₄-alkanol, more especially ethanol or propanol).

The organic solvent free from water may be a single organic solvent or a mixture of two or more organic solvents. It is preferred that when the medium is an organic solvent free from water it is a mixture of 2 to 5 different organic solvents. This allows a medium to be selected which gives good control over the drying characteristics and storage stability of the ink.

Ink media comprising an organic solvent free from water are particularly useful where fast drying times are required and particularly when printing onto hydrophobic and non-absorbent substrates, for example plastics, metal and glass.

Preferred low melting solid media have a melting point in the range from 60°C to 125°C. Suitable low melting point solids include long chain fatty acids or alcohols, preferably those with C₁₈₋₂₄ chains, and sulphonamides. The dye of Formula (1) may be dissolved in the low melting point solid or may be finely dispersed in it.

The dyes of the invention may be used as the sole colorant in inks because of their attractive black shade. They benefit from particularly good light fastness and good optical density. However, if desired, one may combine the dyes with one or more further colorants if a slightly different shade is required for a particular end use. The further colorants are preferably dyes. When further colorants are included in the ink these are preferably selected from black, cyan and yellow colorants and combinations thereof.

Preferred black colorants include C.I.Food Black 2, C.I.Direct Black 19, C.I.Reactive Black 31, Pro-Jet™ Fast Black 2, C.I.Direct Black 195; C.I.Direct Black 168; and black dyes described in patents by Lexmark (e.g. EP 0 539,178 A2, Example 1, 2, 3, 4 and 5), Orient Chemicals (e.g. EP 0 347 803 A2, pages 5-6, azo dyes 3, 4, 5, 6, 7, 8, 12, 13, 14, 15 and 16) and Seiko Epson Corporation.

Preferred cyan colorants include C.I.Direct Blue 199; C.I.Acid Blue 9; C.I.Direct Blue 307; C.I.Reactive Blue 71; and C.I.Direct Blue 85.

Preferred yellow colorants include C.I.Direct Yellow 142; C.I.Direct Yellow 132; C.I.Direct Yellow 86; C.I.Direct Yellow 85; C.I.Direct Yellow 173; and C.I.Acid Yellow 23.

However, as mentioned above, it is not normally necessary to use further colorants in conjunction with dyes of the present invention.

The ink may also contain additional components conventionally used in ink jet printing inks, for example viscosity and surface tension modifiers, corrosion inhibitors, biocides, kogation reducing additives and surfactants which may be ionic or non-ionic.

A further aspect of the invention provides a process for forming an image on a substrate comprising applying an ink containing a dye of Formula (1) to the substrate by means of an ink jet printer.

The ink used in this process is preferably as defined in the second aspect of the present invention.

Preferably the ink contains less than 500ppm, more preferably less than 100ppm, especially less than 30ppm and more especially less than 20ppm in total of divalent and trivalent metal ions (other than metal ions bound to a dye component). The halide content is preferably less than 500ppm, more preferably less than 250ppm. The term 'ppm' means parts per million by weight based on the total weight of ink. The metal ion and halide content may be adjusted to the desired range using any suitable technique, e.g. ultrafiltration, reverse osmosis, ion exchange or a combination thereof.

The ink may be used, as is, for ink jet printers or alternatively it may be used as a concentrate which is diluted and/or further formulated to give an ink jet printing ink. The concentrates are a useful form for transportation, avoiding the expense of transporting the water contained in finally formulated inks.

The ink jet printer preferably applies the ink to the substrate in the form of droplets which are ejected through a small orifice onto the substrate. Preferred ink jet printers are piezoelectric ink jet printers and thermal ink jet printers. In thermal ink jet printers, programmed pulses of heat are applied to the ink in a reservoir by means of a resistor adjacent to the orifice, thereby causing the ink to be ejected in the form of small droplets directed towards the substrate during relative movement between the substrate and the orifice. In piezoelectric ink jet printers the oscillation of a small crystal causes ejection of the ink from the orifice.

The substrate is preferably paper, plastic, a textile, metal or glass, more preferably paper, an overhead projector slide or a textile material, especially paper.

Preferred papers are plain or treated papers which may have an acid, alkaline or neutral character.

Preferred paper are plain or treated papers which may have an acid, alkaline or neutral character. Examples of commercially available treated papers include HP Premium Coated Paper (available from Hewlett Packard Inc), HP Photopaper (available from Hewlett Packard Inc), Stylus Pro 720 dpi Coated Paper, Epson Photo Quality Glossy Film (available from Seiko Epson Corp.), Epson Photo Quality Glossy Paper (available from Seiko Epson Corp.), Canon HR 101 High Resolution Paper (available from Canon), Canon GP 201 and GP 301 Glossy Paper (available from Canon), and Canon HG 101 and HG201 High Gloss Film (available from Canon).

A further aspect of the present invention provides a paper, an overhead projector slide or a textile material printed with an ink, a dye or by means of a process as hereinbefore defined.

A still further aspect of the present invention provides an ink jet printer cartridge, optionally refillable, comprising a chamber and an ink, wherein the ink is present in the chamber and the ink is as defined in the second aspect of the present invention.

The following Examples illustrate how dyes according to the invention may be synthesised.

### Examale 1

### Preparation of:

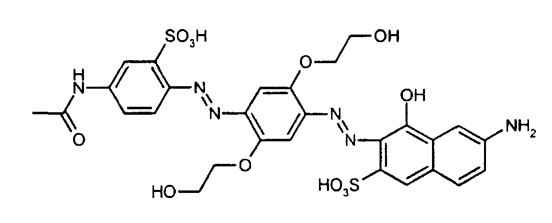

### Step 1

4-aminoacetanilide-3-sulphonic acid (17.7g) was dissolved in water (300ml) and the pH was adjusted to 11-12 using lithium hydroxide (2M). The solution was carbon-screened and sodium nitrite (4.55g) added to the filtrate. The solution was then added to a mixture of ice and water to which had been added hydrochloric acid (20ml) and the mixture was stirred for 2hrs at 0-10°C. Excess nitrous acid was destroyed by the addition of sulphamic acid.

### Step 2

2,5-bis(2-Acetoxyethoxy)aniline (17.82g) was dissolved in acetone (200ml).

### Step 3 - Coupling

The product from step 2 was added to the product of step 1. Pyridine (5ml) was then added and the mixture allowed to self warm before stirring for a further 16hrs at room temperature. The product was then filtered off and washed with lithium chloride solution (500ml, 10%). The product was, filtered-off, pulled dry on the filter and used without further purification.

### Step 4

### Preparation of the Title Product

The product of step 3 was dissolved in water (500ml) by adjusting the pH to 8-9 using lithium hydroxide. The solution was screened and sodium nitrite (8.28g) added to the filtrate. The mixture was then added to a stirred solution of hydrochloric acid (20ml) in water (100ml) and stirred for 1.5hrs at room temperature before destroying excess nitrous acid using sulphamic acid.
Gamma acid (16.2g) was dissolved in water (300ml) by adjusting the pH to 10 using lithium hydroxide solution (2M). The solution was stirred at 0-10°C and the diazonium salt solution added slowly maintaining the pH at 10-10.5 throughout the addition. On completion of the addition the mixture was further stirred for 1 hr at 0-10°C. Lithium chloride (30% w/v) was then added slowly and the product isolated (hot) by filtration and washed with lithium chloride solution (21, 30%). The damp cake was slurried in acetone (1I) using a high shear mixer, filtered and washed with acetone (1I).

### Example 2

### Preparation of:

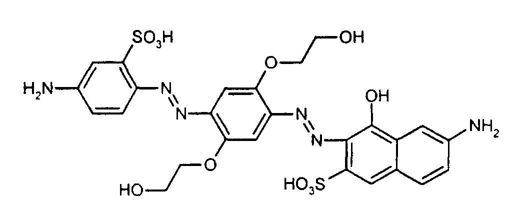

The product from Example 1 was dissolved in water (1I) and lithium hydroxide (80g) added. The solution was heated to 70-75°C until thin layer chromatography showed the hydrolysis to be complete (approx. 3hrs). The pH was adjusted to 8 and the solution cooled to 50°C. Lithium chloride (15% w/v) was then added slowly and the product isolated (hot) by filtration and washed with lithium chloride solution (11, 20%). The resultant product was dissolved in water (400ml) and purified by dialysis. Evaporation of the water at 70°C gave 19.38g of the title product having a lambda max at 595nm.

### Example 3

### Preparation of:

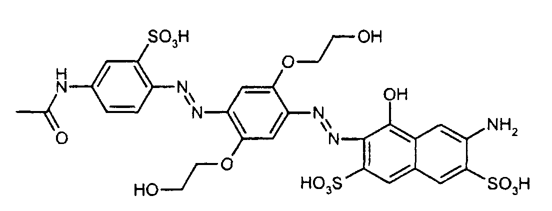

The method of Example 1 was repeated except that in step 4, 2R-Acid (22.26g) was used in place of Gamma acid.

### Example 4

### Preparation of:

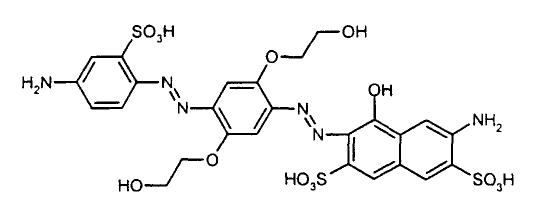

The product from Example 3 was dissolved in water (11) and lithium hydroxide (80g) added. The solution was heated to 70-75°C until thin layer chromotography showed the hydrolysis to be complete (approx. 3hrs). The pH was adjusted to 8 and the solution cooled to 50°C. Lithium chloride (20% w/v) was then added slowly and the product isolated (hot) by filtration and washed with lithium chloride solution (1l, 25%). The resultant product was dissolved in water (400ml) and purified by dialysis. Evaporation of the water at 70°C gave 11.87g of the title product having a lambda maximum of 604nm.

### Example 5:

### Preparation of:

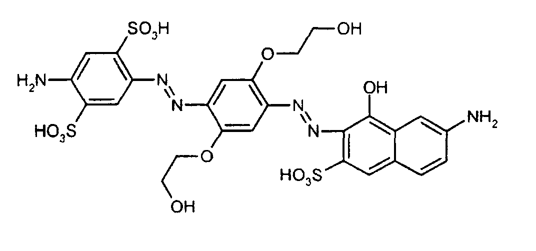

### Step 1

4-acetylaminoaniline-2,5-disulphonic acid (64.08g) was dissolved in water (400ml) and the pH adjusted to 8-9 using lithium hydroxide (2M). Sodium nitrite (9.1g) was added and the solution added to a mixture of ice and water to which had been added hydrochloric acid (40ml) and the mixture stirred at 0-10°C for 1hr. Excess nitrous acid was destroyed by the addition of sulphamic acid.

### Step 2

2,5-bis-(2-acetoxyethoxy)aniline (35.64g) was dissolved in acetone (300ml).

### Step 3

The product of step 2 was added to the product of step 1 and the mixture allowed to self warm before stirring for a further 16hrs at room temperature. The solution was adjusted to pH 7 by the addition of lithium hydroxide. Lithium chloride (25% w/v) was then slowly added causing the temperature to rise to 60-65°C. After allowing to self cool to 30°C the precipitated product was filtered off and washed with lithium chloride ( 1litre, 30% w/v) before drying in an oven at 60°C. The product was used in step iv) without further purification.

### Step 4

The product of step 3(53.1g) was dissolved in water (300ml) by adjusting the pH of the solution to 9 with lithium hydroxide (2M). Sodium nitrite (6.9g) was added and the solution added to a mixture of water (50ml) and hydrochloric acid (20ml). After stirring at room temperature for 1hr excess nitrous acid was destroyed by the addition of sulphamic acid.

Gamma acid (13.5g) was dissolved in water (300ml), the pH adjusted to 10-10.5 with lithium hydroxide (2M) and then cooled to 0-10°C. The diazonium salt solution was slowly added maintaining the pH at 10-10.5 by addition of lithium hydroxide (2M) and then further stirred for 1hr. The solution was heated to 40°C and lithium chloride (160g) slowly added during which time the temperature rose to 70°C. The precipitated product was filtered off at 70°C and washed with lithium chloride solution (25% w/v, 1litre) before pulling dry on the filter. The damp cake was stirred in water (1litre) and lithium hydroxide (40g) added. After heating to 70°C for 2hrs the solution was cooled to 50°C adjusted to pH 7 with hydrochloric acid. Lithium chloride (200g) was slowly added causing the temperature to rise to -70°C. The precipitated product was filtered off at 70-80°C and washed with lithium chloride (1litre, 25%w/v). The damp filter cake was dissolved in water (500ml) adjusting to pH 9-10 with lithium hydroxide before dialysing to low conductivity. Evaporation of the water gave 22g of the title product having a lambda maximum of 597nm and extinction coefficient of 49,000.

### Example 6

### Preparation of:

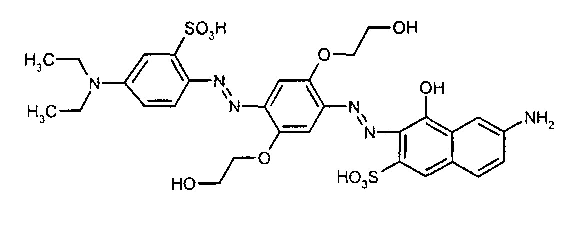

### Step 1

### Preparation of:

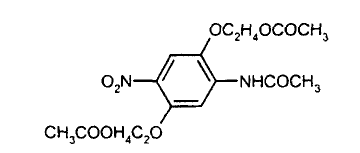

2,5-bis-(2acetoxyethoxy)aniline (297g) was dissolved in acetic acid (500ml) at 40-50°C. Acetic anhydride (150ml) was then slowly added and the temperature raised to 80°C for 1hr. After cooling to room temperature nitric acid (70ml) was added over 1hr. During the course of the addition further acetic acid (1litre) was added to facilitate stirring. On completion of the addition the reaction mixture was stirred overnight and the product isolated by drown-out into water (3litre). After washing well with water (8litres) the product was recrystallised from 74 OP ethanol and dried to give the title product (341 g, 89% yield).

### Step 2

### Preparation of:

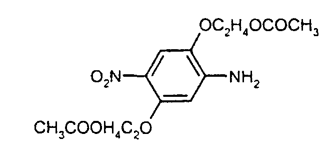

The product from step 1 was stirred and heated to 65°C in a mixture of sodium hydroxide solution (1I, 2M) and 74 OP ethanol (800ml) for 2hrs. The hot solution was neutralised by the addition of hydrochloric acid, allowed to cool to room temperature and the product isolated by filtration before drying at 60°C, to give 118g of product.

### Step 3

### Preparation of:

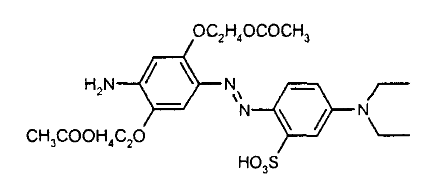

The product from step 2 (25.8g) was added to a mixture of water (400ml) and hydrochloric acid (30ml) and cooled to 0-10°C. Sodium nitrite (7.59g) was slowly added and the solution further stirred for 1 hr before destroying excess nitrous acid by the addition of sulphamic acid. A solution of sodium N,N-diethylmetanilate (30g) in water (200ml) was added to the diazonium salt solution and the pH adjusted to 4-5 by careful addition of sodium hydroxide (2M). After stirring for 2hrs the pH was raised to 7 before stirring overnight at room temperature. The resulting suspension was adjusted to pH 1 with hydrochloric acid and the product isolated by filtration and washed with brine (20%w/v, 500ml).

The crude product was dissolved in a mixture of water (800ml) and acetone (500ml) at room temperature. To this was added a solution of sodium sulphite (2.5g) and sodium sulphide (40g) in water (300ml). After stirring for 8hrs hydrochloric acid was added to adjust to pH 7-8 and stirring continued overnight. Sodium chloride (250g) was added to the suspension before isolating the product by filtration and washing with brine (1litre) and drying, to give 48g of product

### Step 4

### Preparation of the Title Product

The product from step 3 (47.05g) was dissolved in a mixture of water (500ml) and acetone (300ml) by adjusting the pH to 9-10 with lithium hydroxide solution (2M). The solution was stirred at 0-10°C and hydrochloric acid (20ml) added followed by the slow addition of sodium nitrite (3.8g). On completion of the addition stirring was continued for 1.5hrs. Excess nitrous acid was destroyed by the addition of sulphamic acid.
Gamma acid (13.5g) was dissolved in water (300ml) by adjusting the pH to 10 with lithium hydroxide (2M). After cooling the solution to 0-10°C the diazonium salt solution from above was slowly added while maintaining the pH at 10-10.5. On completion of the addition the mixture was stirred and allowed to self warm to room temperature overnight. The precipitated product was isolated by filtration and washed with lithium chloride solution (2 l, 10%w/v). After pulling dry on the filter the damp solid was dispersed in acetone (2 I) using a high shear mixer before isolating by filtration and washing with acetone.

The product was dissolved in water at pH 8-9 adjusting the pH with 2 M lithium hydroxide and the solution heated to 30°C. Lithium chloride (150g) was slowly added causing the temperature to rise to 60°C. The precipitated product was isolated by filtration and washed with lithium chloride solution (1 I, 20%w/v) before re-dissolving in water (800ml) by adjusting the pH to 9-10 with lithium hydroxide. The resulting solution was dialysed to low conductivity, filtered and the title product (17.7g) isolated by evaporation to dryness in an oven at 70°C. The resultant title dye had a lambda maximum of 619nm and extinction coefficient of 54,900.

### Example 7

### Preparation of:

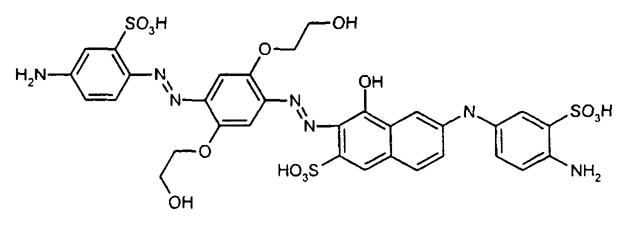

The title product was prepared by the method of Example 1 and Example 2 except that the Gamma acid used in Example 1, step 4 was replaced by : 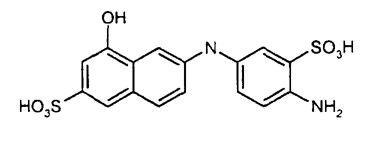 prepared by the Bucherer reaction of Gamma acid with 1,4-phenylenediamine-2-sulphonic acid. The title product had a lambda maximum of 605nm and had an extinction coefficient of 38,000.

### Example 8

### Preparation of:

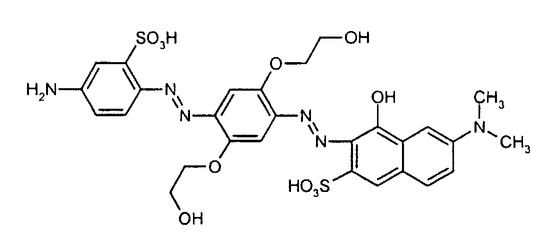

The title product was prepared by the method of Example 1 and Example 2 replacing the Gamma acid used in Example 1, step 4 by 6-dimethylamino-4-hydroxy-2-naphthalenesulphonic acid. The title product gave a lambda maximum at 594nm and an extinction coefficient of 35,000.

### Example 9

### Preparation of:

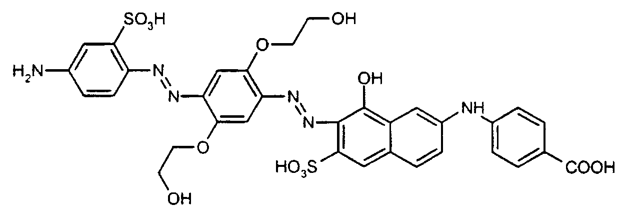

The title product was prepared by the method of Example 1 and Example 2 replacing the Gamma acid used in Example 1, step 4 by 6-(4-carboxyphenyl)amino-4-hydroxy-2-naphthalenesulphonic acid (obtained from Metropolitan Eximchem Ltd., Mumbai, India). The title product gave a lambda maximum at 606nm and an extinction coefficient of 41,000.

### Example 10

### Preparation of:

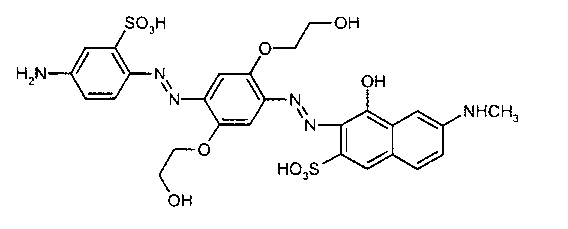

The title product was prepared by the method of Example 1 and Example 2 replacing the Gamma acid used in Example 1, step 4 by 4-hydroxy-6-methylamino-2-naphthalenesulphonic acid (obtained from Metropolitan Eximchem Ltd., Mumbai, India). The title product gave a lambda maximum at 602nm and an extinction coefficient of 39,000.

### Example 11-21 - Mixtures

The dye mixtures described in Table A may be prepared in which all parts are by weight and are shown in brackets. CID means C.I. Direct and CIA means C.I. Acid.

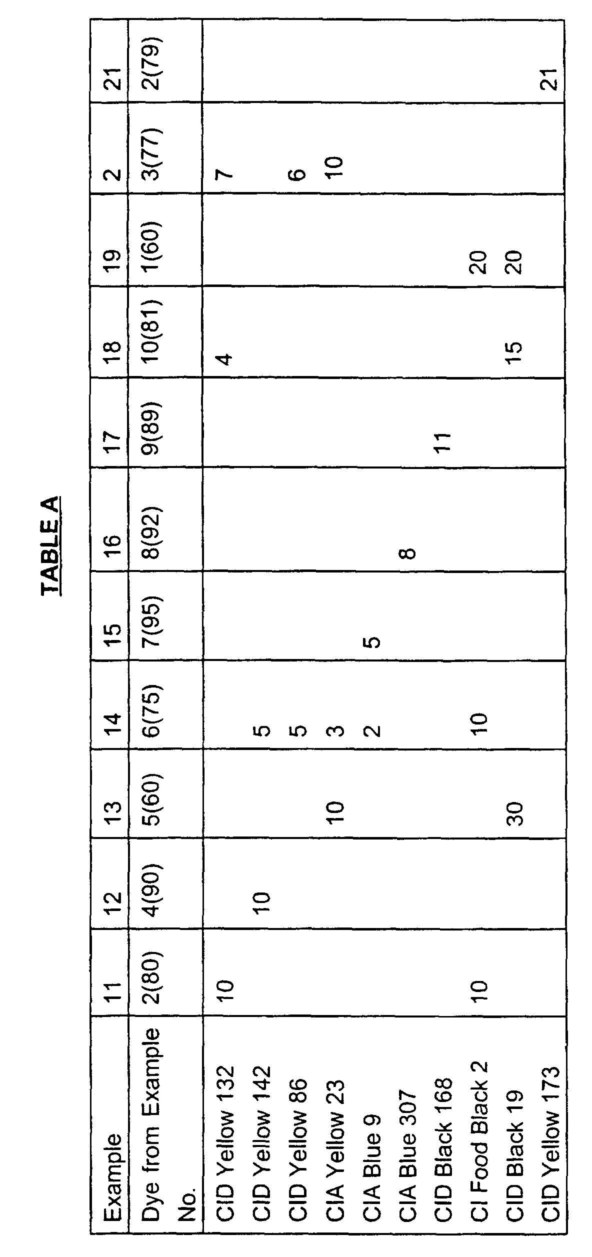

### Inks

The inks described in Tables I and II may be prepared wherein the Dye described in the first column is the Dye made in the above Example of the same number. Numbers quoted in the second column onwards refer to the number of parts of the relevant ingredient and all parts are by weight. The inks may be applied to paper by thermal or piezo ink jet printing.

The following abbreviations are used in Table I and II:
PG = propylene glycol
DEG = diethylene glycol
NMP = N-methyl pyrollidone
DMK = dimethylketone
IPA = isopropanol
MEOH = methanol
2P = 2-pyrollidone
MIBK = methylisobutyl ketone
P12 = propane-1,2-diol
BDL = butane-2,3-diol
CET= cetyl ammonium bromide
PHO = Na₂HPO₄ and
TBT = tertiary butanol
TDG = thiodiglycol

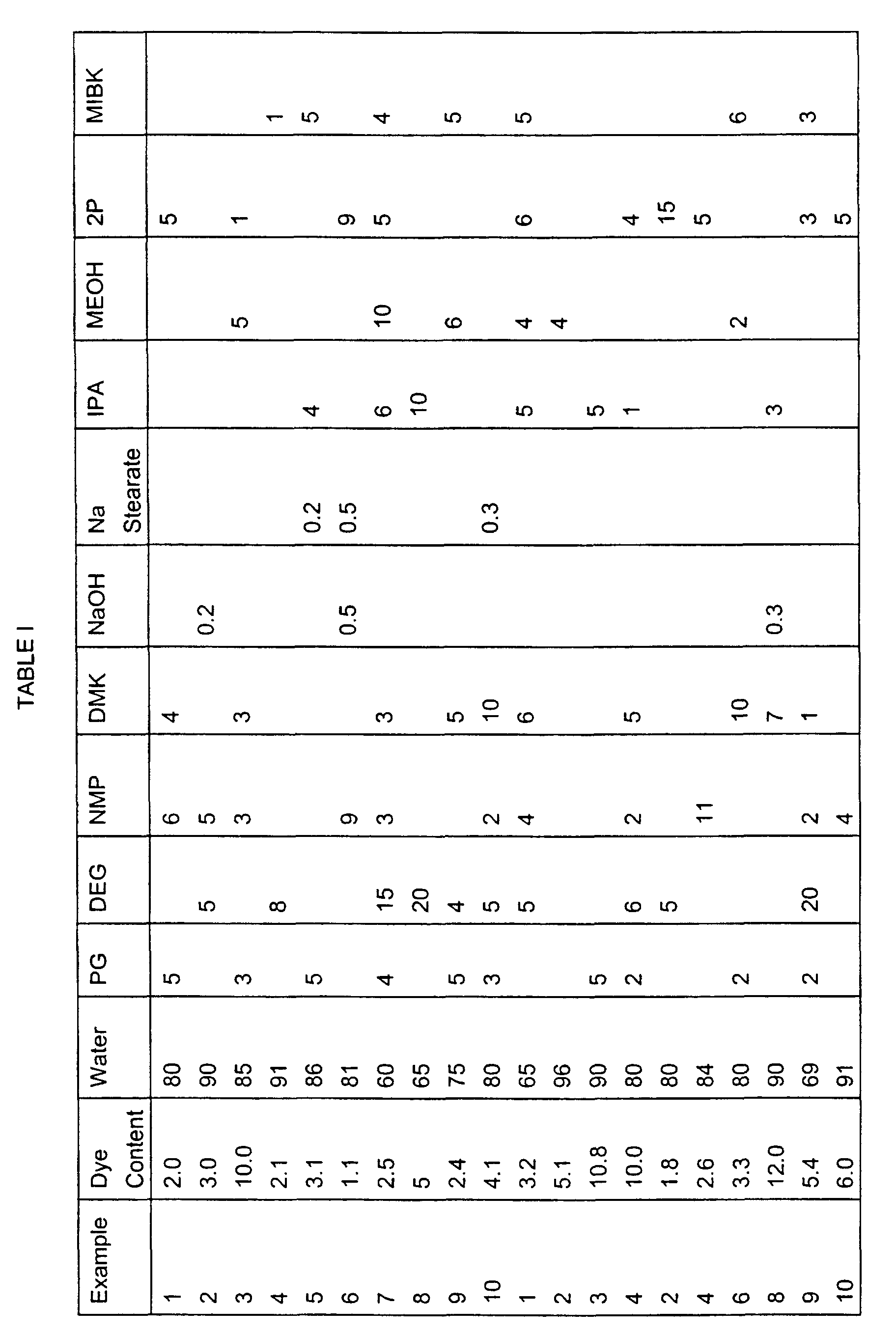

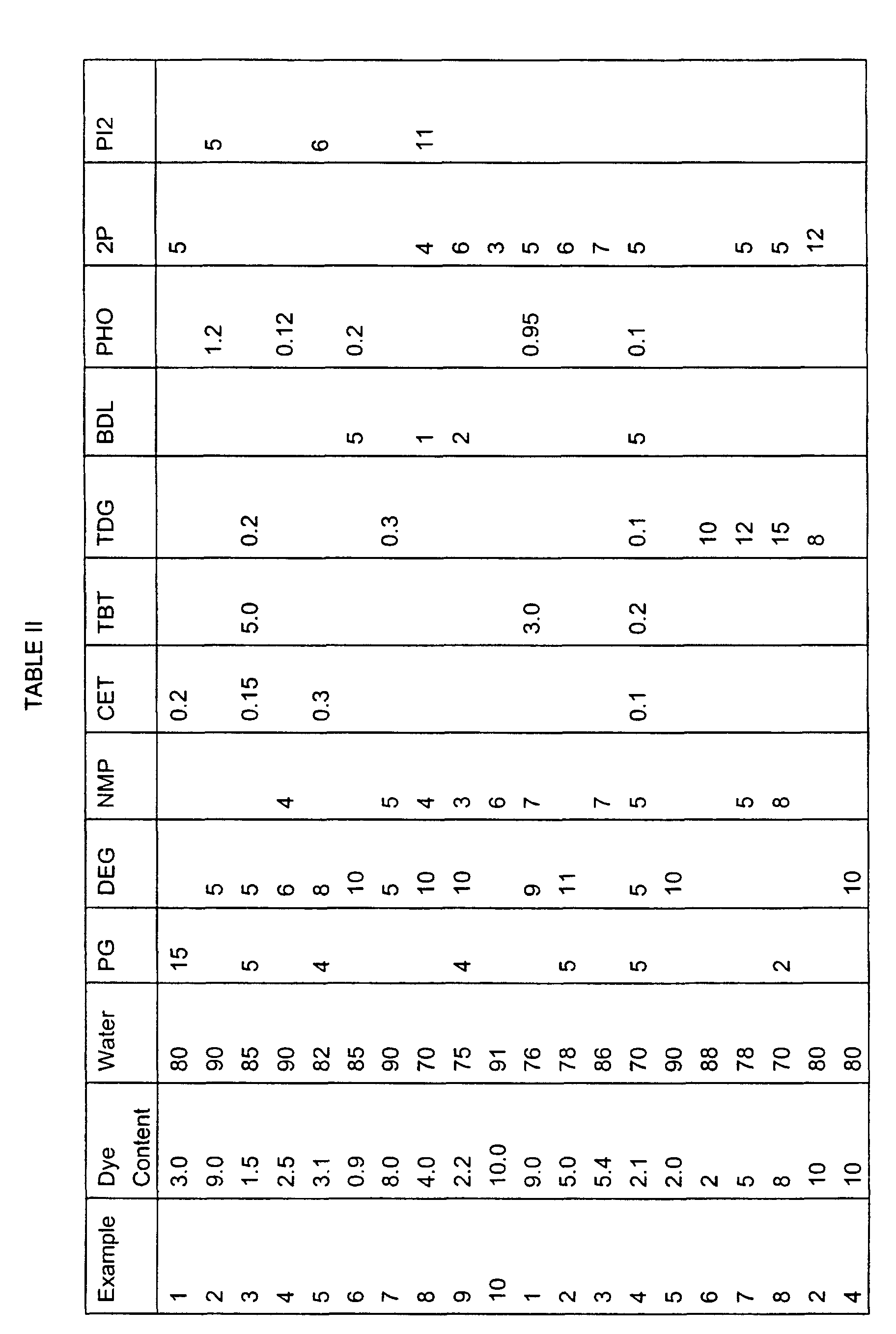

## Claims

1. A compound of Formula (1) and salts thereof: 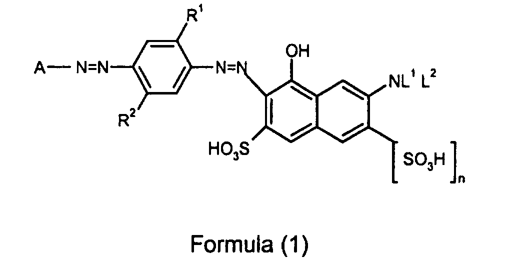 wherein:
A is a substituted phenyl group carrying a group of the formula -NR³R⁴ and an ortho group selected from sulpho, phosphonato and phosphinato;
n is 0 or 1;
L¹ and L² are each independently H, optionally substituted alkyl, optionally substituted cycloalkyl or optionally substituted aryl, or L¹ and L² together with the N atom to which they are attached form an optionally substituted 5- or 6- membered ring;
R¹ and R² are each independently optionally substituted alkyl or optionally substituted alkoxy wherein at least one of R¹ and R² carries an -OH group; and
R³ and R⁴ are each independently H, optionally substituted alkyl, optionally substituted cycloalkyl or optionally substituted aryl, or R³ and R⁴ together with the nitrogen atom to which they are attached form an optionally substituted 5- or 6-membered ring; or
R³ is H, optionally substituted alkyl, optionally substituted cycloalkyl or optionally substituted aryl and R⁴ is an acyl group.

2. A compound according to claim 1 wherein n is 0; L¹ and L² are H; and R³ and R⁴ are each independently H, optionally substituted alkyl, optionally substituted cycloalkyl or optionally substituted aryl, or R³ and R⁴ together with the N atom to which they are attached form an optionally substituted 5- or 6- membered ring.

3. A compound according to claim 1 wherein n is 1; L¹ and L² are H; and R³ and R⁴ are each independently H, optionally substituted alkyl, optionally substituted cycloalkyl or optionally substituted aryl, or R³ and R⁴ together with the nitrogen atom to which they are attached form an optionally substituted 5- or 6-membered ring.

4. A compound according to claim 1 wherein n is 0; L¹ and L² are H; R³ is H, optionally substituted alkyl, optionally substituted cycloalkyl or optionally substituted aryl; and R⁴ is an acyl group.

5. A compound according to claim 1 wherein n is 1; L¹ and L² are H; R³ is H, optionally substituted alkyl, optionally substituted cycloalkyl or optionally substituted aryl; and R⁴ is an acyl group.

6. A compound according to any one of claims 1 to 3 or 6 wherein R³ and R⁴ are each independently selected from C₁₋₄-alkyl, C₁₋₄-alkyl-OH, phenyl or phenyl carrying a carboxy and/or sulpho group, or R³ and R⁴ together with the nitrogen to which they are attached form an optionally substituted morpholino or piperidino ring.

7. A compound according to any one of claims 1, 4 or 5 wherein R³ is selected from C₁₋₄-alkyl, C₁₋₄-alkyl-OH, phenyl and phenyl carrying a carboxy and/or sulpho group.

8. A compound according to any one of claims 1, 4, 5, or 7 wherein R⁴ is of the formula -COR⁵, -SOR⁵ or -SO₂R⁵, wherein R⁵ is H, optionally substituted alkyl, optionally substituted cycloalkyl or optionally substituted aryl.

9. A compound according to any one of the preceding claims wherein the group of the formula -NR³R⁴ is in the para position with respect to the azo linkage.

10. A compound according to any of the preceding claims wherein the ortho group on A is sulpho.

11. A compound according to any one of the preceding claims wherein one of R¹ and R² is -OC₁₋₄-alkyl-OH and the other is -OC₁₋₄-alkyl or -OC₁₋₄-alkyl-OH.

12. An ink comprising a compound according to any one of the preceding claims and a liquid medium or a low melting point solid medium.

13. An ink according to claim 12 which contains a further colorant selected from black, cyan and yellow colorants.

14. An ink according to claim 12 or 13 which contains less than 500ppm in total of divalent and trivalent metal ions.

15. A process for forming an image on a substrate comprising applying an ink according to claim 12, 13 or 14 to the substrate by means of an ink jet printer.

16. A paper, an overhead projector slide or a textile material printed with an ink according to claim 12, 13 or 14 , a compound according to any one of claims 1 to 11 or by means of a process according to claim 15.

17. An ink jet printer cartridge, optionally refillable, comprising a chamber and an ink, wherein the ink is present in the chamber and the ink is as defined in claim 12, 13 or 14.

## Patentansprüche

1. Verbindung der Formel (1) und deren Salze: 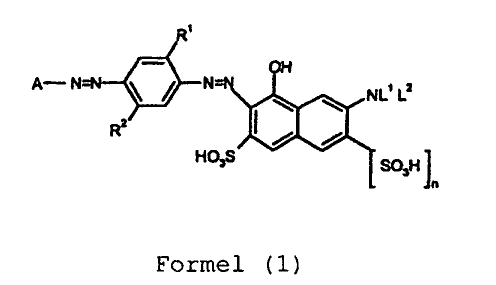 bei der bedeuten:
A ist eine substituierte Phenylgruppe, tragend eine Gruppe der Formel -NR³R⁴ und eine orthoständige Gruppe aus der Reihe Sulfo, Phosphonato und Phosphinato;
n ist 0 oder 1;
L¹ und L² sind jeweils unabhängig voneinander H, gegebenenfalls substituiertes Alkyl, gegebenenfalls substituiertes Cycloalkyl oder gegebenenfalls substituiertes Aryl oder bilden zusammen mit dem sie verbindenden N-Atom einen gegebenenfalls substituierten 5- oder 6gliedrigen Ring;
R¹ und R² sind jeweils unabhängig voneinander gegebenenfalls substituiertes Alkyl oder gegebenenfalls substituiertes Alkoxy, wobei mindestens einer der Reste R¹ und R² eine - OH-Gruppe trägt; und R³ und R⁴ sind jeweils unabhängig voneinander H, gegebenenfalls substituiertes Alkyl, gegebenenfalls substituiertes Cycloalkyl oder gegebenenfalls substituiertes Aryl oder bilden zusammen mit dem sie verbindenden Stickstoffatom einen gegebenenfalls substituierten 5- oder 6gliedrigen Ring; oder
R³ ist H, gegebenenfalls substituiertes Alkyl, gegebenenfalls substituiertes Cycloalkyl oder gegebenenfalls substituiertes Aryl; und R⁴ ist eine Acylgruppe.

2. Verbindung nach Anspruch 1, bei der bedeuten:
n ist 0; L¹ und L² sind H; und R³ und R⁴ sind jeweils unabhängig voneinander H, gegebenenfalls substituiertes Alkyl, gegebenenfalls substituiertes Cycloalkyl oder gegebenenfalls substituiertes Aryl oder bilden zusammen mit dem sie verbindenden N-Atom einen gegebenenfalls substituierten 5- oder 6gliedrigen Ring.

3. Verbindung nach Anspruch 1, bei der bedeuten:
n ist 1; L¹ und L² sind H; und R³ und R⁴ sind jeweils unabhängig voneinander H, gegebenenfalls substituiertes Alkyl, gegebenenfalls substituiertes Cycloalkyl oder gegebenenfalls substituiertes Aryl oder bilden zusammen mit dem sie verbindenden Stickstoffatom einen gegebenenfalls substituierten 5- oder 6gliedrigen Ring.

4. Verbindung nach Anspruch 1, bei der bedeuten:
n ist 0; L¹ und L² sind H; R³ ist H, gegebenenfalls substituiertes Alkyl, gegebenenfalls substituiertes Cycloalkyl oder gegebenenfalls substituiertes Aryl; und R⁴ ist eine Acylgruppe.

5. Verbindung nach Anspruch 1, bei der bedeuten:
n ist 1; L¹ und L² sind H; R³ ist H, gegebenenfalls substituiertes Alkyl, gegebenenfalls substituiertes Cycloalkyl oder gegebenenfalls substituiertes Aryl; und R⁴ ist eine Acylgruppe.

6. Verbindung nach einem der Ansprüche 1 bis 3 oder 6, bei der bedeuten: R³ und R⁴ sind jeweils unabhängig voneinander unter C₁₋₄-Alkyl, C₁₋₄-Alkyl-OH, Phenyl oder eine Carboxy- und/oder Sulfogruppe tragendes Phenyl ausgewählt oder bilden zusammen mit dem sie verbindenden Stickstoffatom einen gegebenenfalls substituierten Morpholino- oder Piperidinoring.

7. Verbindung nach einem der Ansprüche 1, 4 oder 5, bei der bedeuten: R³ ist unter C₁₋₄-Alkyl, C₁₋₄-Alkyl-OH, Phenyl und eine Carboxy- und/oder Sulfogruppe tragendes Phenyl ausgewählt.

8. Verbindung nach einem der Ansprüche 1, 4, 5 oder 7, bei der bedeuten: R⁴ entspricht der Formel -COR⁵, -SOR⁵ oder -SO₂R⁵ mit R⁵ in der Bedeutung H, gegebenenfalls substituiertes Alkyl, gegebenenfalls substituiertes Cycloalkyl oder gegebenenfalls substituiertes Aryl.

9. Verbindung nach einem der vorhergehenden Ansprüche, bei der die Gruppe der Formel -NR³R⁴ in para-Stellung zur Azobindung gebunden steht.

10. Verbindung nach einem der vorhergehenden Ansprüche, bei der es sich bei der an A orthoständigen Gruppe um Sulfo handelt.

11. Verbindung nach einem der vorhergehenden Ansprüche, bei der einer der Reste R¹ und R² -OC₁₋₄-Alkyl-OH und der andere -OC₁₋₄-Alkyl oder -OC₁₋₄-Alkyl-OH bedeutet.

12. Tinte, enthaltend eine Verbindung gemäß einem der vorhergehenden Ansprüche sowie ein flüssiges Medium oder ein niedrigschmelzend festes Medium.

13. Tinte nach Anspruch 12, enthaltend ein weiteres Farbmittel, ausgewählt unter schwarzen, blaugrünen und gelben Farbmitteln.

14. Tinte nach Anspruch 12 oder 13 mit einem Gehalt an zwei- und dreiwertigen Metallionen von insgesamt weniger als 500 ppm.

15. Verfahren zur Bebilderung eines Substrats, bei dem man darauf eine Tinte gemäß Anspruch 12, 13 oder 14 mit einem Tintenstrahldrucker aufbringt.

16. Papier, Overhead-Projektorfolie oder Textilmaterial, bedruckt mit einer Tinte gemäß Anspruch 12, 13 oder 14, einer Verbindung gemäß einem der Ansprüche 1 bis 11 oder nach einem Verfahren gemäß Anspruch 15.

17. Gegebenenfalls nachfüllbare Tintenstrahldruckerpatrone mit Kammer und Tinte, bei der die Kammer eine Tinte gemäß Anspruch 12, 13 oder 14 enthält.

## Revendications

1. Composé de formule (1) et sels de celui-ci 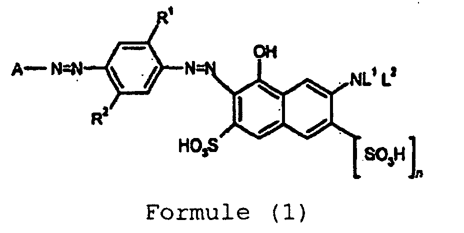 dans laquelle :
A est un groupe phényle substitué portant un groupe de formule -NR³R⁴ et un groupe en position ortho choisi parmi les groupes sulfo, phosphonato et phosphinato ;
n représente 0 ou 1 ;
L¹ et L² représentent chacun indépendamment H, un groupe alkyle éventuellement substitué, un groupe cycloalkyle éventuellement substitué ou un groupe aryle éventuellement substitué, ou L¹ et L² forment ensemble avec l'atome N auquel ils sont attachés un cycle à 5 ou 6 membres éventuellement substitué ;
R¹ et R² représentent chacun indépendamment un groupe alkyle éventuellement substitué ou un groupe alcoxy éventuellement substitué, où au moins un parmi R¹ et R² porte un groupe -OH ; et
R³ et R⁴ représentent chacun indépendamment H, un groupe alkyle éventuellement substitué, un groupe cycloalkyle éventuellement substitué ou un groupe aryle éventuellement substitué, ou R³ et R⁴ forment ensemble avec l'atome d'azote auquel ils sont attachés un cycle à 5 ou 6 membres éventuellement substitué ; ou
R³ représente H, un groupe alkyle éventuellement substitué, un groupe cycloalkyle éventuellement substitué ou un groupe aryle éventuellement substitué et R⁴ représente un groupe acyle.

2. Composé selon la revendication 1, dans lequel n représente 0 ; L¹ et L² représentent H ; et R³ et R⁴ représentent chacun indépendamment H, un groupe alkyle éventuellement substitué, un groupe cycloalkyle éventuellement substitué ou un groupe aryle éventuellement substitué, ou R³ et R⁴ forment ensemble avec l'atome d'azote auquel ils sont attachés un cycle à 5 ou 6 membres éventuellement substitué.

3. Composé selon la revendication 1, dans lequel n représente 1 ; L¹ et L² représentent H ; et R³ et R⁴ représentent chacun indépendamment H, un groupe alkyle éventuellement substitué, un groupe cycloalkyle éventuellement substitué ou un groupe aryle éventuellement substitué, ou R³ et R⁴ forment ensemble avec l'atome d'azote auquel ils sont attachés un cycle à 5 ou 6 membres éventuellement substitué.

4. Composé selon la revendication 1, dans lequel n représente 0 ; L¹ et L² représentent H ; R³ représente H, un groupe alkyle éventuellement substitué, un groupe cycloalkyle éventuellement substitué ou un groupe aryle éventuellement substitué ; et R⁴ représente un groupe acyle.

5. Composé selon la revendication 1, dans lequel n représente 1 ; L¹ et L² représentent H ; R³ représente H, un groupe alkyle éventuellement substitué, un groupe cycloalkyle éventuellement substitué ou un groupe aryle éventuellement substitué ; et R⁴ représente un groupe acyle.

6. Composé selon l'une quelconque des revendications 1 à 3 ou 6, dans lequel R³ et R⁴ sont choisis chacun indépendamment parmi un groupe alkyle en C₁ à C₄, (alkyle en C₁ à C₄)-OH, phényle ou phényle portant un groupe carboxy et/ou sulfo ou R³ et R⁴ forment ensemble avec l'azote auquel ils sont attachés un cycle morpholino ou pipéridino substitué.

7. Composé selon l'une quelconque des revendications 1, 4 ou 5, dans lequel R³ est choisi parmi un groupe alkyle en C₁ à C₄, (alkyle en C₁ à C₄)-OH, phényle et phényle portant un groupe carboxy et/ou sulfo.

8. Composé selon l'une quelconque des revendications 1, 4, 5 ou 7 dans lequel R⁴ présente la formule -COR⁵, -SOR⁵ ou -SO₂R⁵, dans laquelle R⁵ représente H, un groupe alkyle éventuellement substitué, un groupe cycloalkyle éventuellement substitué ou un groupe aryle éventuellement substitué.

9. Composé selon l'une quelconque des revendications précédentes, dans lequel le groupe de formule - NR³R⁴ est en position para par rapport à la liaison azo.

10. Composé selon l'une quelconque des revendications précédentes, dans lequel le groupe en position ortho sur A est un groupe sulfo.

11. Composé selon l'une quelconque des revendications précédentes, dans lequel un parmi R¹ et R² est un groupe -O-(alkyle en C₁ à C₄)-OH et l'autre est un groupe -O-(alkyle en C₁ à C₄) ou -O-(alkyle en C₁ à C₄)-OH.

12. Encre contenant un composé selon l'une quelconque des revendications précédentes et un milieu liquide ou un milieu solide présentant un point de fusion bas.

13. Encre selon la revendication 12 qui contient un autre colorant choisi parmi les colorants noir, cyan et jaune.

14. Encre selon la revendication 12 ou 13, qui contient au total moins de 500 ppm d'ions métalliques divalents et trivalents.

15. Procédé pour former une image sur un substrat, comprenant l'application d'une encre selon la revendication 12, 13 ou 14 sur un substrat au moyen d'une imprimante à jet d'encre.

16. Papier, transparent pour rétroprojecteur ou matériau textile imprimé avec une encre selon la revendication 12, 13 ou 14, un composé selon l'une quelconque des revendications 1 à 11 ou au moyen d'un procédé selon la revendication 15.

17. Cartouche pour imprimante à jet d'encre, éventuellement rechargeable, comprenant une chambre et une encre, dans laquelle l'encre est présente dans la chambre et l'encre est telle que définie dans la revendication 12, 13 ou 14.
